# EUROPEAN PATENT APPLICATION

(11) **EP 4 678 452 A1**
(43) Date of publication of application: **14.01.2026**
(21) Application number: 25188211.4
(22) Date of filing: 08.07.2025
(51) Int. Cl.: B60K 35/65

(54) **APPARATUS FOR CONTROLLING DISPLAY OF VEHICLES AND METHOD THEREOF**

(30) Priority: 08.07.2024 KR 20240089739
(71) Applicant: AUMOVIO Germany GmbH, 60488 Frankfurt am Main (DE)
(72) Inventor: You, Jaepio, 30077 Sejong (KR)
(74) Representative: Aumovio Corporation

(57) **Abstract**

Apparatus for controlling a display (210) of a vehicle and method thereof. The apparatus for controlling a display (210) of a vehicle according to an aspect of the present invention may include a display unit (210) installed inside a vehicle, a housing (220) arranged at the rear of the display unit (210) and including an accommodation space inside thereof, a display driving unit (230) arranged inside the housing (220) and driving the display unit (210) in an up-and-down or left-and-right direction, a switch unit (100) generating a signal to allow at least one of the display unit (210) and a side mirror (310) to move in an up-and-down or left-and-right direction, and a processor (400) controlling the display driving unit (230) to move the display (210) or controlling a side mirror (310) driving unit (330) to move the side mirror unit (330) according to a signal generated from the switch unit (100).

## Description

### [Technical Field]

The present invention relates to an apparatus for controlling a display of a vehicle that allows a display unit installed inside the vehicle to move in an up-and-down or left-and-right direction and a method thereof.

### [Background Art of the Invention]

A display apparatus is installed on the front of the inside of a vehicle to display information related to the operation of the vehicle, the condition of the vehicle, and the convenience of the passenger, etc. Specifically, the display apparatus may display information on a route from a starting point to a destination of the vehicle, a current location of the vehicle, etc. The display apparatus can play music or video, and may receive signals for terrestrial or satellite broadcasting and display broadcast content. The display apparatus may display information for the convenience of passengers, such as news and weather. In addition, a passenger may input various information using the vehicle display apparatus. The display apparatus may include, for example, an AVN system, a NAVIGATION system, etc.

In order to secure the convenience of a driver, the display apparatus provides more convenience to the driver by displaying vehicle operation-related information and map information with the introduction of a navigation system even while the vehicle is moving.

The display apparatus is equipped with a display unit that displays useful information such as an example of an AV or NAVIGATION system so that the driver can easily recognize necessary information visually.

However, the display apparatus that is typically installed on the front of the inside of the vehicle is designed to be driver-centric to facilitate the driver's operation. That is, the display apparatus is close to a driver's seat, or the display unit thereof faces the front, and thus a passenger in a passenger seat has difficulty viewing and using the display unit, which is problematic.

In addition, there is a problem that the visibility of the display unit is reduced due to light shining from the outside.

Furthermore, there is a need to provide a function that allows an angle of the display unit to be optimally adjusted according to the driver's body type.

The background technology of the present invention is disclosed in Korean Patent Registration No. 10-1543524 (2015.08.11).

### [Disclosure of the Invention]

### [Problems to be Solved]

The present invention has been made to improve the problems described above, and an object of the present invention is to provide an apparatus for controlling a display of a vehicle that enables the driver as well as the passenger in the passenger seat to easily view and operate the display unit installed inside the vehicle and adjust the angle and position of the display unit according to light shining from the outside and a method thereof.

Another object of the present invention is to provide an apparatus for controlling a display of vehicles that enables the angle of the display unit to be optimally adjusted according to the driver's body type and a method thereof.

The problems to be solved by the present invention are not limited to the problem(s) mentioned above, and other problem(s) not mentioned can be clearly understood by those skilled in the art from the description below.

### [Solution to the Problems]

An apparatus for controlling a display of a vehicle according to an aspect of the present invention may include a display unit installed inside a vehicle, a housing arranged at the rear of the display unit and including an accommodation space inside thereof, a display driving unit arranged inside the housing and driving the display unit in an up-and-down or left-and-right direction, a switch unit generating a signal to allow at least one of the display unit and a side mirror to move in an up-and-down or left-and-right direction, and a processor controlling the display driving unit to move the display or controlling a side mirror driving unit to move the side mirror unit according to a signal generated from the switch unit.

In the present invention, the switch unit may include a display activation switch for activating driving control of the display unit, and a side mirror operation switch for generating a switch signal for a driving direction and a driving angle of at least one of the display unit and the side mirror.

In the present invention, the display activation switch may be disposed at the center of the side mirror operation switch.

In the present invention, the display activation switch may be disposed around the side mirror operation switch.

In the present invention, the signal generated from the switch unit may include at least one of an on signal of the display activation switch and a switch signal of the side mirror operation switch.

In the present invention, the processor may drive the display unit according to the driving direction and the driving angle included in the switch signal when the switch signal of the side mirror operation switch is received after receiving the on signal of the display activation switch.

In the present invention, the processor may drive the side mirror according to the driving direction and the driving angle included in the switch signal when only the switch signal of the side mirror operation switch is received.

In the present invention, the display driving unit may include a first display driving unit that drives the display unit in the left-and-right direction, and a second display driving unit that drives the display unit in the up-and-down direction.

In the present invention, the display unit, the housing, and the display driving unit may be supported by a support fixed to a crash pad.

In the present invention, the side mirror driving unit may include a first side mirror driving unit that drives the side mirror in the left-and-right direction, and a second side mirror driving unit that drives the side mirror in the up-and-down direction.

A method for controlling a display of a vehicle according to another aspect of the present invention may include a step of receiving, by a processor, a signal including at least one of an on signal of a display activation switch and a switch signal of a side mirror operation switch from a switch unit, and a step of driving, by the processor, a display unit or a side mirror according to the signal.

In the step of driving of the method, the processor may drive the display unit according to a driving direction and a driving angle included in the switch signal when the signal includes the on signal of the display activation switch and the switch signal of the side mirror operation switch.

In the step of driving of the method, the processor may drive the side mirror according to a driving direction and a driving angle included in the switch signal when the signal includes only the switch signal of the side mirror operation switch.

A method for controlling a display of vehicles according to still another aspect of the present invention may include a step of activating, by a processor, driving control of a display unit when a display activation switch is turned on, a step of receiving, by the processor, a switch signal including a driving direction and a driving angle input through a side mirror operation switch, and a step of driving, by the processor, the display unit according to the driving direction and the driving angle.

The method may further include a step of driving, by the processor, the side mirror according to a driving direction and a driving angle input through a side mirror operation switch when a switch signal including the driving direction and the driving angle is received in an off state of the display activation switch.

### [Effects of the Invention]

A display control system for a vehicle and method thereof according to an embodiment of the present invention have the effect of enabling a driver as well as a passenger in a passenger seat to easily view and operate a display unit installed inside a vehicle and adjusting an angle and position of the display unit according to light shining from the outside, by using a switch unit in which a display activation switch is added to a side mirror operation switch to drive the display unit installed inside the vehicle in an up-and-down or left-and-right direction.

The display control system for the vehicle and method thereof according to an embodiment of the present invention have the effect of optimally adjusting the angle of the display unit according to the driver's body type.

Meanwhile, the effects of the present invention are not limited to the effects mentioned above, and various effects may be included within a range obvious to those skilled in the art from the contents described below.

### [Brief Description of the Drawings]

FIG. 1 is a block diagram schematically showing the configuration of an apparatus for controlling a display of a vehicle according to an embodiment of the present invention.
FIG. 2 is an exemplary diagram for describing an installation location of the switch unit and the display apparatus shown in FIG. 1.
FIG. 3 and FIG. 4 are exemplary diagrams for describing a switch unit according to an embodiment of the present invention.
FIG. 5 is a perspective view showing one direction of a display apparatus according to an embodiment of the present invention.
FIG. 6 is a perspective view showing the other direction of the display apparatus according to an embodiment of the present invention.
FIG. 7 is an exemplary diagram for describing the driving of the display unit according to an embodiment of the present invention.
FIG. 8 is a flowchart for describing a method for controlling a display of a vehicle according to an embodiment of the present invention.

### [Specific Details for Carrying Out the Invention]

Hereinafter, an apparatus for controlling a display of vehicles and method thereof according to an embodiment of the present invention will be described with reference to the accompanying drawings. In this process, the thickness of lines and the size of components illustrated in the drawings may be exaggerated for clarity and convenience of description.

In addition, the terms described below are terms defined in consideration of functions in the present invention, and may vary depending on the intention or custom of the user or operator. Therefore, the definitions of these terms should be made based on the contents throughout this specification.

In addition, the implementation described in this specification may be implemented as, for example, a method or process, a device, a software program, a data stream, or a signal. Even if discussed only in the context of a single form of implementation (e.g., discussed only as a method), the implementation of the discussed feature may also be implemented in another form (e.g., an apparatus or program). The apparatus may be implemented as appropriate hardware, software, firmware, etc. The method may be implemented in an apparatus such as a processor, which generally refers to a processing device including, for example, a computer, a microprocessor, an integrated circuit, or a programmable logic device. The processor also includes a communication device such as a computer, a cell phone, a personal digital assistant ("PDA"), and other devices that facilitate communication of information between end-users.

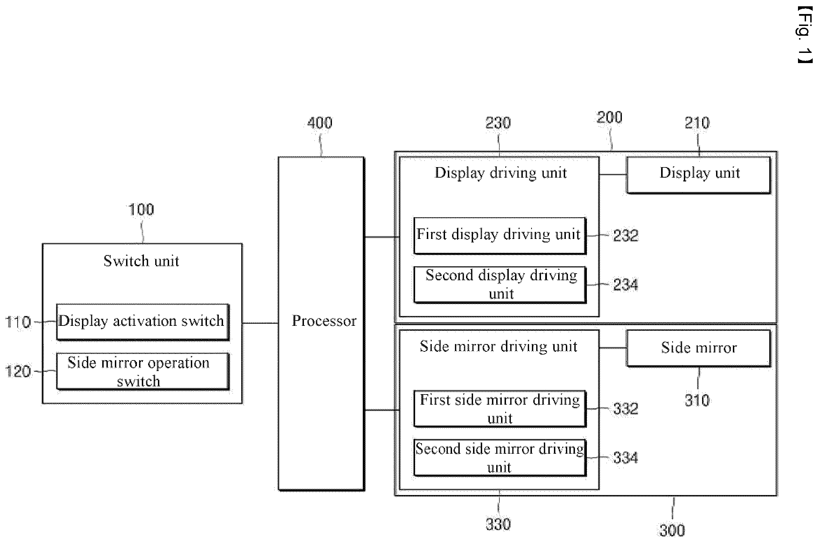

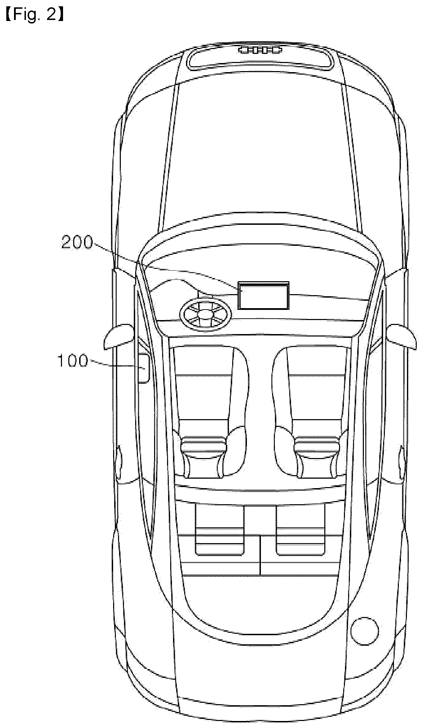

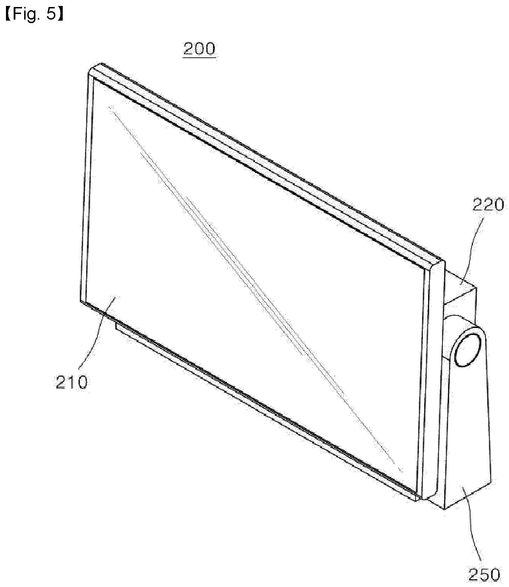

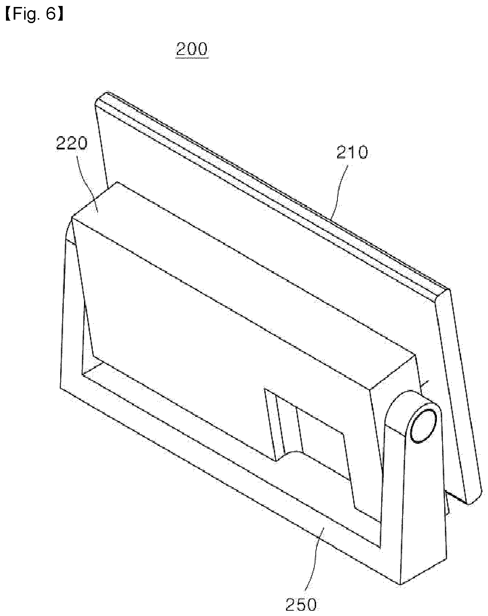

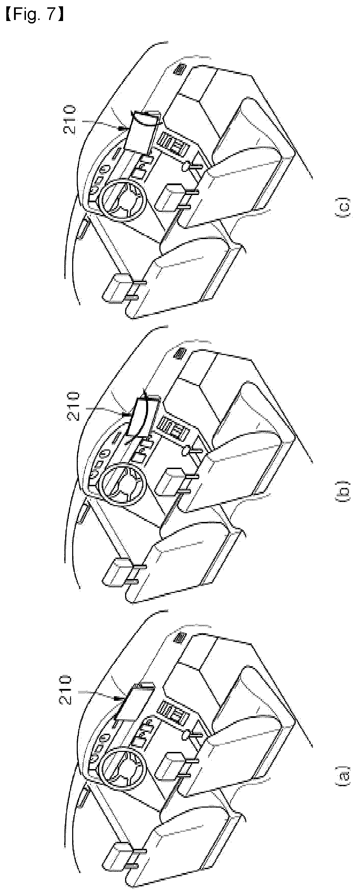

FIG. 1 is a block diagram schematically showing the configuration of an apparatus for controlling a display of a vehicle according to an embodiment of the present invention, FIG. 2 is an exemplary diagram for describing an installation location of the switch unit and the display apparatus shown in FIG. 1, FIG. 3 and FIG. 4 are exemplary diagrams for describing a switch unit according to an embodiment of the present invention, FIG. 5 is a perspective view showing one direction of a display apparatus according to an embodiment of the present invention, FIG. 6 is a perspective view showing the other direction of the display apparatus according to an embodiment of the present invention, and FIG. 7 is an exemplary diagram for describing the driving of the display unit according to an embodiment of the present invention.

Referring to FIG. 1, an apparatus for controlling a display of a vehicle according to an embodiment of the present invention may include a switch unit 100, a display apparatus 200, a side mirror apparatus 300, and a processor 400.

The switch unit 100 may generate a signal to drive at least one of a display unit 210 and a side mirror 310 in an up-and-down or left-and-right direction. Here, the signal may include at least one of an on signal of a display activation switch 110 and a switch signal of a side mirror operation switch 120. The switch signal may include at least one of a driving direction and a driving angle.

The switch unit 100 may be disposed at a place where a switch for adjusting an angle of a side mirror 310 is located, as shown in FIG. 2.

The switch unit 100 may include the display activation switch 110 and the side mirror operation switch 120.

The display activation switch 110 may be a switch provided to activate the driving control of the display unit 210. The display activation switch 110 may be implemented in a form through which on/off can be input, for example, as a button, etc.

The display activation switch 110 may be disposed on the side mirror operation switch 120 or may be disposed around the side mirror operation switch 120. The display activation switch 110 may be disposed at various positions depending on the shape of the side mirror operation switch 120.

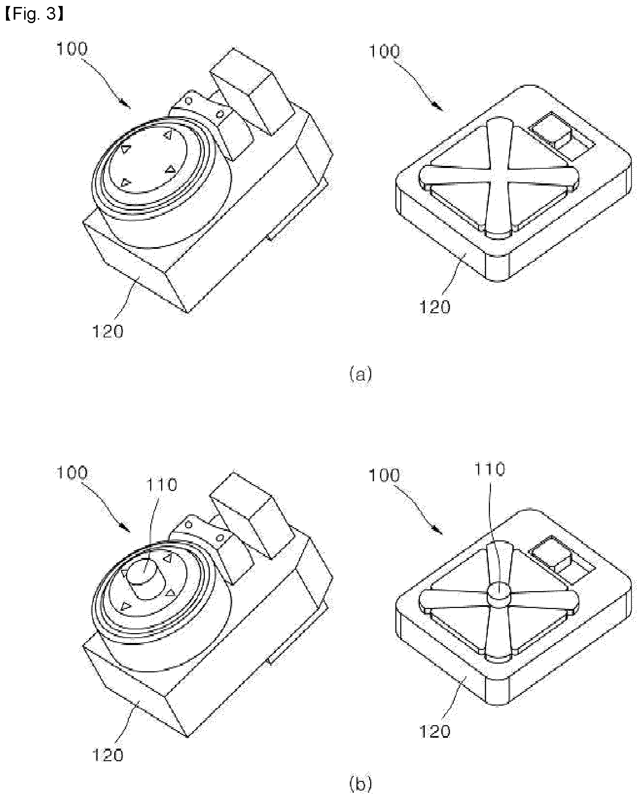

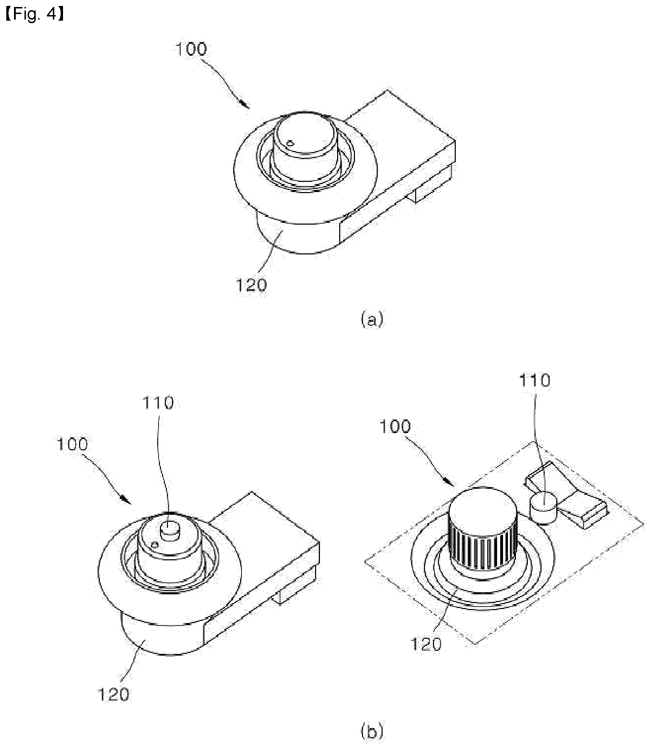

For example, when the side mirror operation switch 120 has a shape like (a) of FIG. 3, the display activation switch 110 may be disposed at the center of the side mirror operation switch 120 like (b) of FIG. 3. In addition, when the side mirror operation switch 120 has a shape like (a) of FIG. 4, the display activation switch 110 may be disposed at the center of the side mirror operation switch 120 like (b) of FIG. 4, or may be disposed next to the side mirror operation switch 120.

The side mirror operation switch 120 may be configured to generate a switch signal for a driving direction and driving angle of at least one of the display unit 210 and the side mirror 310.

The side mirror operation switch 120 may be configured to generate a switch signal to drive the side mirror 310 in the left-and-right or up-and-down direction in order to provide a rear view suitable for the driver's field of vision.

A user may drive the side mirror 310 in the up-and-down or left-and-right direction by adjusting the side mirror operation switch 120 in the up-and-down or left-and-right direction without turning on the display activation switch 110.

For example, if the user presses the left button of the side mirror operation switch 120 without turning on the activation switch 110, the processor 400 may control a first side mirror driving unit 332 to drive the side mirror 310 in the left direction.

The side mirror operation switch 120 may be configured to generate a switch signal that causes the display portion 210 to be driven in the left-and-right or up-and-down direction to allow a driver as well as a passenger in the passenger seat to view information output from the display unit 210.

In order to drive the display unit 210 using the side mirror operation switch 120, the display activation switch 110 should be turned on, and then the side mirror operation switch 120 should be adjusted in the up-and-down or left-and-right direction.

For example, if the user turns on the display activation switch 110 and then presses the left button of the side mirror operation switch 120, the processor 400 may control a first display driving unit 232 to drive the display unit 210 in the left direction.

The side mirror operation switch 120 may be implemented as, for example, a direction button, a touch switch, etc. that allows selection of up/down/left/right directions.

The display apparatus 200 may be installed on the front of the interior of the vehicle as shown in FIG. 2, and display information related to the operation of the vehicle, the condition of the vehicle, and the convenience of the passenger.

The display apparatus 200 may include the display unit 210, a housing 220, a display driving unit 230, and a support 250 as shown in FIGS. 5 and 6.

The display unit 210 may be installed on the front of the interior of the vehicle. The display unit 210 may display information for the operation of the vehicle and the convenience of the passenger. The display unit 210 may output AV or NAVIGATION system-related information so that the driver may easily visually recognize necessary information.

The display unit 210 may output video or game-related information so that a passenger in the passenger seat may watch a video or play a game.

The display unit 210 may be electrically connected to a connector that receives an output signal from the outside, receive an external output signal from the connector, and output various information such as AV or NAVIGATION system-related information.

The housing 220 is disposed at the rear of the display unit 210 and may include an accommodation space inside thereof.

The housing 220 may be formed in a square frame shape in which the direction in which the display unit 210 is disposed is open. Therefore, the housing 220 formed as a square frame may have an accommodation space formed therein.

The display driving unit 230 may be accommodated inside the accommodation space of the housing 220.

The display driving unit is disposed inside the housing 220, and may drive the display unit 210 in an up-and-down or left-and-right direction under the control of the processor 400. Here, the driving may include motions such as rotation, turning, and movement.

The display driving unit 230 is coupled to the rear of the display unit 210 toward the engine room, and may selectively drive the display unit 210 in a left-and-right or up-and-down direction.

The display driving unit 230 may selectively drive the display unit 210 in the left-and-right or up-and-down direction, and accordingly, the driver as well as the passenger in the passenger seat may easily manipulate an angle and position of the display unit 210 in a desired direction and may easily adjust an angle and position of the display unit 210 according to light shining from the outside.

The display driving unit 230 may include a first display driving unit 232 and a second display driving unit 234.

The first display driving unit 232 may drive the display unit 210 in a left-and-right direction.

The first display driving unit 232 may include a first motor (not shown) and a driving shaft (not shown).

The first motor is a member that generates driving force and may be disposed inside the housing 220. The first motor may be connected to the driving shaft. The driving force may be transmitted from the first motor to the driving shaft so that the driving shaft is driven.

The driving shaft may be connected to the first motor. The driving shaft may be driven by the driving force transmitted from the first motor. The drive shaft is formed in a cylindrical shape, and one end thereof may be drivably coupled to the upper surface of the housing 220, and the other end thereof may be drivably coupled to the lower surface of the housing 220.

The second display driving unit 234 may drive the display unit 210 in an up-and-down direction.

The second display driving unit 234 is accommodated inside the housing 220 or the support 250, and may be coupled to any one of both side surfaces of the housing 220.

The second display driving unit 234 is a member that generates a driving force, and may be disposed inside the housing 220. The second display driving unit 234 may include a second motor that generates a driving force, etc.

The support 250 is fixed to a crash pad, and may support the display unit 210 and the display driving unit 230.

The side mirror apparatus 300 may drive the side mirror 310 in the up-and-down or left-and-right direction under the control of the processor 400. Here, the driving may include operations such as rotation and turning.

The side mirror apparatus 300 may include the side mirror 310 and a side mirror driving unit 330.

The side mirror driving unit 330 may set the side mirror 310 to an optimal state that may secure the rear view suitable for the driver's field of vision while rotating the side mirror 310 in the up-and-down or left-and-right direction under the control of the processor 400.

The side mirror driving unit 330 may include a first side mirror driving unit 332 and a second side mirror driving unit 334.

The first side mirror driving unit 332 may drive the side mirror 310 in the left-and-right direction. The first side mirror driving unit 332 may include a motor, etc.

The second side mirror driving unit 334 may drive the side mirror 310 in the up-and-down direction. The second side mirror driving unit 334 may include a motor, etc.

The side mirror apparatus 300 has the same configuration as a configuration of driving the conventional side mirror 310, and thus a detailed description thereof will be omitted.

The processor 400 may control the display driving unit 230 to drive the display unit 210 or control the side mirror driving unit 330 to drive the side mirror 310 according to a signal generated from the switch unit 100.

When the display activation switch 110 is not turned on and a switch signal is received from the side mirror operation switch 120, the processor 400 may control the side mirror driving unit 330 to drive the side mirror 310 in the up-and-down or left-and-right direction according to the switch signal.

When the display activation switch 110 is turned on and the switch signal is received from the side mirror operation switch 120, the processor 400 may control the display driving unit 230 according to the switch signal to drive the display unit 210 in the up-and-down or left-and-right direction. That is, when only the switch signal of the side mirror operation switch 120 is received, the processor 400 may drive the side mirror 310 according to the driving direction and driving angle included in the switch signal.

For example, when the user turns on the display activation switch 110 and then presses a right direction button of the side mirror operation switch 120, the processor 400 may drive the display unit 210 as in (a) of FIG. 7 in the right direction as in (b) of FIG. 7. In this state, when the user presses an up direction button of the side mirror operation switch 120, the processor 400 may drive the display unit 210 in the up direction as in (c) of FIG. 7.

The processor 400 is a configuration that controls the overall operation of the display control system, and may be operatively connected to at least one of the switch unit 100, the display apparatus 200, and the side mirror apparatus 300. The processor 400 may be implemented as at least one of a central processing unit (CPU), an application specific integrated circuit (ASIC), a digital signal processor (DSP), a programmable logic device (PLD), field programmable gate arrays (FPGAs), a micro controller unit (MCU), and a system on chip (SoC), and may be configured to control a plurality of hardware or software components connected to the processor 400 by driving an operating system or an application, perform various data processing and computations, and execute at least one instruction stored in a memory (not shown) and store the execution result data in the memory.

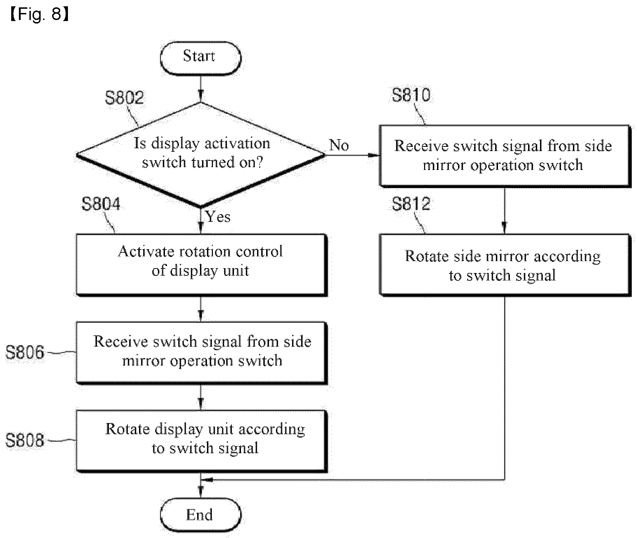

FIG. 8 is a flowchart for describing a method for controlling a display of a vehicle according to an embodiment of the present invention.

Referring to FIG. 8, when the display activation switch 110 is turned on (S802), the processor 400 activates the driving control of the display unit 210 (S804).

Thereafter, when a switch signal including a driving direction and a driving angle input through the side mirror operation switch 120 is received (S806), the processor 400 drives the display unit 210 according to the driving direction and driving angle included in the switch signal (S808).

For example, the processor 400 may move the display unit 210 according to the driving direction and the driving angle included in the switch signal.

If the display activation switch 110 is not turned on and the switch signal including the driving direction and the driving angle input through the side mirror operation switch 120 is received (S810), the processor 400 drives the side mirror 310 according to the driving direction and the driving angle included in the switch signal (S812).

For example, the processor 400 may move the side mirror 310 according to the driving direction and the driving angle included in the switch signal.

As described above, the display control system for a vehicle and method thereof according to an embodiment of the present invention have the effect of enabling a driver as well as a passenger in a passenger seat to easily view and operate a display unit installed inside a vehicle and adjusting an angle and position of the display unit according to light shining from the outside, by using a switch unit in which a display activation switch is added to a side mirror operation switch to drive the display unit installed inside the vehicle in an up-and-down or left-and-right direction.

The display control system for the vehicle and method thereof according to an embodiment of the present invention have the effect of optimally adjusting the angle of the display unit according to the driver's body type.

Although the present invention has been described with reference to the embodiments illustrated in the drawings, these are merely exemplary, and those having ordinary skill in the art will understand that various modifications and equivalent other embodiments are possible therefrom. Therefore, the true technical protection scope of the present invention should be determined by the following patent claims.

### [Description of the Symbols]

100: Switch unit
110: Display activation switch
120: Side mirror operation switch
200: Display apparatus
210: Display unit
220: Housing
230: Display driving unit
232: First display driving unit
234: Second display driving unit
250: Support
300: Side mirror apparatus
310: Side mirror
330: Side mirror driving unit
332: First side mirror driving unit
334: Second side mirror driving unit

## Claims

1. An apparatus for controlling a display of vehicles, comprising:
a display unit installed inside a vehicle;
a housing arranged at the rear of the display unit and including an accommodation space inside thereof;
a display driving unit arranged inside the housing and driving the display unit in an up-and-down or left-and-right direction;
a switch unit generating a signal to allow at least one of the display unit and a side mirror to move in an up-and-down or left-and-right direction; and
a processor controlling the display driving unit to move the display or controlling a side mirror driving unit to move the side mirror unit according to a signal generated from the switch unit.

2. The apparatus of claim 1, **characterized in that**
the switch unit includes:
a display activation switch for activating driving control of the display unit; and
a side mirror operation switch for generating a switch signal for a driving direction and a driving angle of at least one of the display unit and the side mirror.

3. The apparatus of claim 2, **characterized in that**
the display activation switch is
disposed at the center of the side mirror operation switch.

4. The apparatus of claim 2, **characterized in that**
the display activation switch is
disposed around the side mirror operation switch.

5. The apparatus of claim 2, **characterized in that**
the signal generated from the switch unit includes
at least one of an on signal of the display activation switch and a switch signal of the side mirror operation switch.

6. The apparatus of claim 5, **characterized in that**
the processor drives
the display unit according to the driving direction and the driving angle included in the switch signal when the switch signal of the side mirror operation switch is received after receiving the on signal of the display activation switch.

7. The apparatus of claim 5, **characterized in that**
the processor drives
the side mirror according to the driving direction and the driving angle included in the switch signal when only the switch signal of the side mirror operation switch is received.

8. The apparatus of claim 1, **characterized in that**
the display driving unit includes:
a first display driving unit that drives the display unit in the left-and-right direction; and
a second display driving unit that drives the display unit in the up-and-down direction.

9. The apparatus of claim 1, **characterized in that**
the display unit, the housing, and the display driving unit are supported by a support fixed to a crash pad.

10. The apparatus of claim 1, **characterized in that**
the side mirror driving unit includes:
a first side mirror driving unit that drives the side mirror in the left-and-right direction; and
a second side mirror driving unit that drives the side mirror in the up-and-down direction.

11. A method for controlling a display of vehicles, comprising:
a step of receiving, by a processor, a signal including at least one of an on signal of a display activation switch and a switch signal of a side mirror operation switch from a switch unit; and
a step of driving, by the processor, a display unit or a side mirror according to the signal.

12. The method of claim 11, **characterized in that**,
in the step of driving,
the processor drives the display unit according to a driving direction and a driving angle included in the switch signal when the signal includes the on signal of the display activation switch and the switch signal of the side mirror operation switch.

13. The method of claim 11, **characterized in that**,
in the step of driving,
the processor drives the side mirror according to a driving direction and a driving angle included in the switch signal when the signal includes only the switch signal of the side mirror operation switch.

14. A method for controlling a display of vehicles, comprising:
a step of activating, by a processor, driving control of a display unit when a display activation switch is turned on;
a step of receiving, by the processor, a switch signal including a driving direction and a driving angle input through a side mirror operation switch; and
a step of driving, by the processor, the display unit according to the driving direction and the driving angle.

15. The method of claim 14, further comprising:
a step of driving, by the processor, the side mirror according to a driving direction and a driving angle input through a side mirror operation switch when a switch signal including the driving direction and the driving angle is received in an off state of the display activation switch.
